# EUROPÄISCHE PATENTSCHRIFT

(11) **EP 0 812 802 B1**
(45) Veröffentlichungstag und Bekanntmachung des Hinweises auf die Patenterteilung: **18.08.1999**
(21) Anmeldenummer: 97107906.6
(22) Anmeldetag: 15.05.1997
(51) Int. Cl.: C01B 3/38, B01J 8/00, B01J 8/06, C01B 3/32, H01M 8/06

(54) **Reformierungsreaktor, insbesondere zur Wasserdampfreformierung von Methanol**
Reformer, especially for the steam reformation of methanol
Réacteur de reformage, spécialement pour le reformage à la vapeur de méthanol

(30) Priorität: 15.06.1996 DE 19623918
(43) Veröffentlichungstag der Anmeldung: 17.12.1997
(73) Patentinhaber: DBB Fuel Cell Engines GmbH, 73230 Kirchheim/Teck-Nabern (DE)
(72) Erfinder: Autenrieth, Rainer, 89155 Erbach (DE); Heil, Dietmar, 88477 Schwendi (DE); Weger, Wolfgang, 71726 Benningen (DE); Benz, Uwe, 88690 Uhldingen (DE)
(74) Vertreter: Kocher, Klaus-Peter

(56) Entgegenhaltungen:
- DE-A- 3 601 366
- US-A- 3 190 470
- PATENT ABSTRACTS OF JAPAN vol. 012, no. 223 (C-507), 24.Juni 1988 & JP 63 021202 A (YAMAHA MOTOR CO LTD), 28.Januar 1988,
- PATENT ABSTRACTS OF JAPAN vol. 013, no. 151 (C-584), 12.April 1989 & JP 63 310703 A (FUJI ELECTRIC CO LTD), 19.Dezember 1988,

## Beschreibung

Die Erfindung bezieht sich auf einen Reformierungsreaktor nach dem Oberbegriff des Anspruchs 1.

Reformierungsreaktoren mit in den Reaktionsraum eingebrachter Katalysatorpelletschüttung sind in vielerlei Ausführungen bekannt und dienen beispielsweise zur Gewinnung von Wasserstoff, der z.B. als Brennstoff für eine Brennstoffzellenanordnung genutzt werden kann. Reformierungsreaktoren dieser Art sind z.B. in den Offenlegungsschriften DE 44 23 587 A1 und DE 44 20 752 A1 offenbart.

Besonders bei mobilen Anwendungen, wie dem Einsatz in brennstoffzellenbetriebenen Kraftfahrzeugen, treten Erschütterungen auf, die bei einer frei beweglich in den Reaktionsraum eingebrachten Katalysatorpelletschüttung zu einem erhöhten Abrieb der Pellets führen können. Dieser Abrieb ist unerwünscht, da er zu Verstopfungen oder anderweitigen Beeinträchtigungen nachgeschalteter Komponenten führen kann. Zudem kommt es bei Fahrzeuglageänderungen im Falle einer losen Pelletschüttung innerhalb des Reformierungsreaktors zu entsprechenden Lageänderungen des Katalysatormaterials. Dies kann sich in Extremsituationen, z.B. bei starken Steigungen, unvorteilhaft auf die Gasgleichverteilung und somit auf die Leistungsfähigkeit des Reaktors auswirken.

Diesen Schwierigkeiten speziell bei mobilen Anwendungen wird bei dem Reformierungsreaktor der eingangs genannten Art dadurch begegnet, daß eine bewegliche Reaktionsraumwandung vorgesehen ist, welche einerseits einen Gasdurchtritt zuläßt und andererseits auf die Katalysatorpelletschüttung einen lagefixierenden Preßdruck ausübt. Ein Reaktor dieser Bauart ist in der Offenlegungsschrift JP 63-21202 (A) offenbart. Dort sitzt die in einen röhrenförmigen Reaktionsraum eingebrachte Katalysatorpelletschüttung auf einer porösen Trägerplatte auf und wird oberseitig von einer gleichfalls porösen Reaktionsraumabdeckkappe bedeckt, die beweglich angeordnet ist und mittels Schraubenfedern, die sich an einer Reaktorgehäusewandung abstützen, auf die Katalysatorpelletschüttung gedrückt wird. Die Abdeckkappe ist abnehmbar angeordnet, um bei abgenommener Kappe einen Austausch des Katalysatormaterials zu ermöglichen.

Ein derartiger Austausch oder eine Nachfüllung von Katalysatormaterial kann insbesondere bei Reformierungsreaktoren zur Wasserstofferzeugung in mobilen Anwendungen von Zeit zu Zeit erforderlich sein. Dabei ist gerade bei Anwendungen in Fahrzeugen für den Einbau des Reformierungsreaktors, z.B. zur Wasserstofferzeugung für ein Brennstoffzellensystem, eine kompakte Anordnung der Gaserzeugungskomponenten wünschenswert. Aufgrund der begrenzten, engen Platzverhältnisse im Fahrzeug ist es ungünstig, wenn zur Nachfüllung von Katalysatormaterial die Reaktionsraumabdeckung des Reaktors insgesamt abgenommen werden muß. Außerdem besteht die Gefahr, daß bei diesem zeitweiligen vollständigen Entfernen der Abdeckung das Katalysatormaterial großflächig mit Luftsauerstoff in Kontakt kommt, was häufig zu einer Schädigung des aktiven Katalysatormaterials führt.

In der Offenlegungsschrift DE 36 01 366 A1 ist ein Röhrenreaktor mit Rohren offenbart, die ein körniges Katalysatormaterial enthalten, mit ihrem oberen Ende in einem oberen Rohrboden angeordnet und im Betrieb von flüssigem Kühlmittel umgeben sowie von einem umzusetzenden Gasgemisch von oben nach unten durchströmt sind. Über dem oberen Rohrboden ist ein senkrecht bewegbarer Verteilerboden angeordnet, der Röhrchen aufweist, welche in den oberen Bereich der Rohre hineinragen. Zum Einfüllen des Katalysatormaterials gibt man das Material auf den Verteilerboden, füllt die Rohre durch die Röhrchen mit dem Material höchstens etwa bis zum unteren Ende der Röhrchen, entfernt das Katalysatormaterial bis auf die gefüllten Röhrchen vom Verteilerboden und entleert die Röhrchen durch Anheben des Verteilerbodens, so daß die Rohre unter Belassen eines oberen, katalysatorfreien Volumens weitgehend gefüllt werden.

Der Erfindung liegt als technisches Problem die Bereitstellung eines Reformierungsreaktors der eingangs genannten Art zugrunde, der für mobile Anwendungen, z.B. zur Gewinnung von Wasserstoff für ein Brennstoffzellensystem eines Kraftfahrzeugs, besonders geeignet ist und insbesondere eine vergleichsweise einfache und problemlose Nachfüllung von Katalysatormaterial in den Reaktionsraum erlaubt.

Die Erfindung löst dieses Problem durch die Bereitstellung eines Reformierungsreaktors mit den Merkmalen des Anspruchs 1. Bei diesem Reformierungsreaktor wird zum einen die Katalysatorpelletschüttung unter einen lagefixierenden Preßdurck gesetzt, was Abrieberscheinungen der Katalysatorpellets weitestgehend unterdrückt, die bei einer losen Pelletschüttung durch das Aufwirbeln von frei beweglichen Pellets und speziell beim Einsatz in Kraftfahrzeugen durch Fahrzeugerschütterungen auftreten können. Die Entwicklung von feinem Abriebstaub, der Verstopfungen innerhalb der Katalysatorpelletschüttung oder eines nachgeschalteten Filters zur Folge haben könnte, wird dadurch weitestgehend vermieden. Dies beugt wiederum einem erhöhten Druckabfall über den Reformierungsreaktor hinweg aufgrund derartiger Verstopfungen und damit einer Verschlechterung der Reformierungseigenschaften vor.

Zum anderen weist der Reformierungsreaktor eine Befüllvorrichtung auf, mit der Katalysatormaterial durch eine Durchtrittsöffnung, die in einer der den Reaktionsraum begrenzenden Reaktionsraumwandungen eingebracht ist, von außen in den Reaktionsraum einfüllbar ist. Durch das Vorsehen dieser Befüllöffnung braucht zum Nachfüllen oder Austauschen von Katalysatormaterial keine Reaktionsraumwandung insgesamt abgenommen werden, so daß nicht die Gefahr besteht, daß das im Reaktionsraum befindliche, aktive Katalysatormaterial an der gesamten, der betreffenden Reaktionsraumwandung gegenüberliegenden Oberfläche mit der Außenatmosphä- re, z.B. mit schädigendem Luftsauerstoff, in Kontakt kommt. Vielmehr ist ein derartiger Kontakt auf höchstens die Fläche der Durchtrittsöffnung der Befüllvorrichtung beschränkt. Diese Fläche kann deutlich kleiner als diejenige einer ganzen Reaktionsraumwandung gehalten werden.

Bei einem nach Anspruch 2 weitergebildeten Reformierungsreaktor beinhaltet die Befüllvorrichtung ein Befüllrohr, das mit einem Ende in die Durchtrittsöffnung der zugehörigen Reaktionsraumwandung mündet und in dessen anderes Ende Katalysatormaterial von außen einfüllbar ist. Das Befüllrohr ist mittels eines Verschlußstößels gegen den Durchtritt von Katalysatormaterial sichernd verschließbar, wobei je nach Anwendungsfall vorgesehen sein kann, den Verschlußstößel gasdurchlässig zu gestalten.

Bei einem nach Anspruch 3 weitergebildeten Reformierungsreaktor beinhaltet die Befüllvorrichtung Mittel zum Zurückbewegen der beweglichen Reaktionsraumwandung während eines Nachfüllvorgangs entgegen der Wirkungsrichtung des Preßdrucks. Dies ermöglicht es, die Katalysatorpelletschüttung vom lagefixierenden Preßdruck zu entlasten und Platz für nachzufüllendes Katalysatormaterial zu schaffen, das auf diese Weise ohne große Druckbelastung in den Reaktionsraum hineingeschoben werden kann, was dadurch bedingte Abrieberscheinungen der Katalysatorpellets minimal hält.

Bei einem nach Anspruch 4 weitergebildeten Reformierungsreaktor ist die Durchtrittsöffnung zum Einbringen von Katalysatormaterial in den Reaktionsraum in der beweglichen Reaktionsraumwandung vorgesehen, die zudem gasdurchlässig perforiert ist. Das Katalysatormaterial wird über ein Befüllrohr nachgefüllt, das mit einem Ende an der beweglichen Reaktionsraumwandung festgelegt ist und damit gleichzeitig als Betätigungselement zum Zurückbewegen dieser Reaktionsraumwandung entgegen des Preßdrucks dienen kann. Das Rohr erstreckt sich durch einen Gaseintrittsoder Gasaustrittsraum hindurch, der an die bewegliche Reaktionsraumwandung auf der dem Reaktionsraum entgegengesetzten Seite angrenzt, und mündet in einen Einfüllhals, der nach außen von einem lösbaren Verschluß abdeckbar ist. Dabei kann je nach Anwendungsfall das Befüllrohr gasdicht im Einfüllhals sitzen, oder es kann bei nicht gasdichter Realisierung Gas vom Gaseintrittsraum in den Einfüllhals und von dort durch das Befüllrohr und dem dann gasdurchlässig ausgeführten Verschlußstößel in den Reaktionsraum gelangen. Letzteres hat den Vorteil, daß auch das im Bereich des Befüllrohres liegende Katalysatormaterial die Reformierungsreaktion aktiv zu unterstützen vermag.

Ein nach Anspruch 5 weitergebildeter Reformierungsreaktor verfügt über eine im unteren Bereich des Reaktionsraums angeordnete Auslaßvorrichtung, mit der Katalysatormaterial aus dem Reaktionsraum abgelassen werden kann. Damit ist es auch für eine teilweise oder vollständige Entnahme von Katalysatormaterial aus dem Reaktionsraum nicht erforderlich, eine Reaktionsraumwandung bwz. Reaktionsraumabdeckung vollständig abzunehmen.

Vorteilhafte Ausführungsformen der Erfindung sind in den Zeichnungen dargestellt und werden nachfolgend beschrieben. Hierbei zeigen:
- Fig. 1: eine schematische Schnittansicht des oberen Bereichs eines Reformierungsreaktors,
- Fig. 2: eine schematische Schnittansicht des oberen Bereichs eines weiteren Reformierungsreaktors und
- Fig. 3: eine schematische Schnittansicht des unteren Bereichs eines Reformierungsreaktors vom Typ der Fig. 1 oder 2.

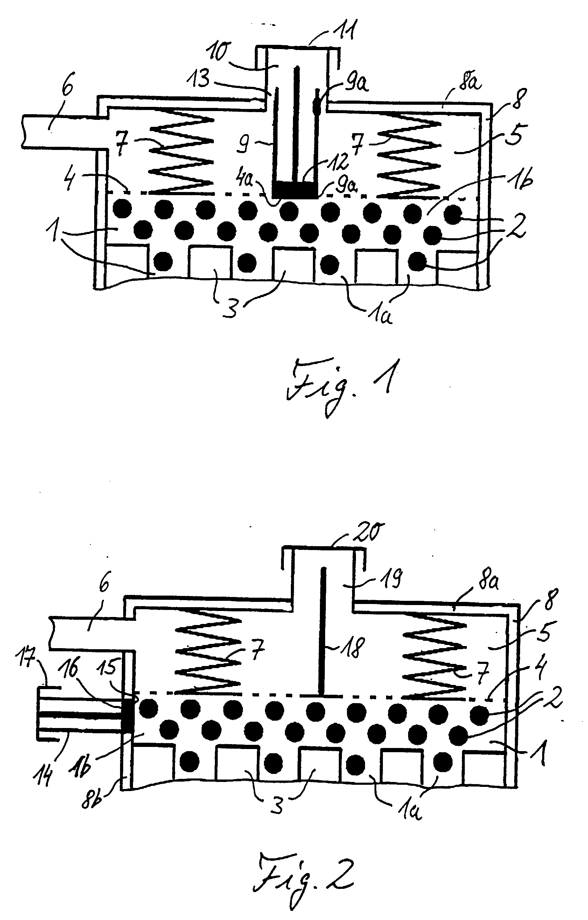

Der in Fig. 1 teilweise mit seinem oberen Teil gezeigte Reformierungsreaktor kann z.B. zur Wasserdampfreformierung von Methanol in einem Kraftfahrzeug dienen, um daraus Wasserstoff als Brennstoff für eine im Fahrzeug vorgesehene Brennstoffzellenanordnung zu gewinnen. Die Reformierungsreaktion erfolgt in einem Reaktionsraum 1, der mit einer in Fig. 1 nur schematisch idealisiert wiedergegebenen Katalysatorpelletschüttung 2 befüllt ist. Die Wahl des Katalysatormaterials richtet sich nach der durchzuführenden Reformierungsreaktion. Für die Wasserdampfreformierung von Methanol eignet sich z.B. ein Cu/ZnO/Al₂O₃-Material. Der Reaktionsraum 1 beinhaltet in einem mittleren Abschnitt röhrenförmige Reaktionskanäle 1a, die an Temperierfluidkanäle 3 angrenzen, durch welche ein Temperierfluid hindurchgeleitet werden kann, um den Reaktionsraum 1 auf einer zur Durchführung der Reformierungsreaktion erforderlichen Temperatur zu halten. Die Temperierfluidkanäle 3 enden oberseitig vor einem oberen, eintrittsseitigen Reaktionsraumbereich 1b, dessen Volumen vollständig mit der Katalysatorpelletschüttung 2 ausgefüllt ist und in den die röhrenförmigen Reaktionsraumkanäle 1a münden.

Der Reaktionsraum 1 ist an seiner Oberseite von einer axial beweglichen Reaktionsraumwandung in Form einer perforierten Druckplatte 4, z.B. aus einem Blechmaterial, von einem darüberliegenden Gasvorraum 5 abgegrenzt, in den eine Anschlußöffnung 6 mündet. Die Anschlußöffnung 6 führt vom Gasvorraum 5 durch ein Reaktorgehäuse 8 hindurch nach außen, das den Gasvorraum 5 und den Reaktionsraum 1 umgibt. Vorliegend bildet der Gasvorraum 5 einen Gaseinlaßraum, in den über die in diesem Fall als Einlaßöffnung fungierende Anschlußöffnung 6 das zu reagierende Gasgemisch zugeführt und über die perforierte Druckplatte 4 in den Reaktionsraum 1 eingeleitet wird. Alternativ kann bei umgekehrter Gasströmungsrichtung der Gasvorraum 5 als Gasauslaßraum fungieren, in dem sich das im Reaktionsraum 1 gebildete Reformatgas sammelt, von wo es über die dann als Auslaßöffnung wirkende Anschlußöffnung 6 abgezogen wird.

In dem Gaseinlaßraum 5 sind mehrere als Druckfedern wirkende Schraubenfedern 7 angeordnet, die sich einerseits gegen die obere Gehäusewand 8a und andererseits gegen die perforierte, bewegliche Druckplatte 4 abstützen und dadurch eine Druckkraft auf die bewegliche Druckplatte 4 in Richtung Reaktionsraum 1 ausüben. Die bewegliche Druckplatte 4 übt dadurch einen entsprechenden Preßdruck auf die Katalysatorpelletschüttung 2 im Reaktionsraum 1 aus, der zur Folge hat, daß die einzelnen Pellets nicht als lose Schüttung im Reaktionsraum 1 vorliegen, sondern in ihrer gegenseitigen Lage fixiert sind. Dadurch führen selbst Erschütterungen, die auf den Reformierungsreaktor im Fahrbetrieb eines Kraftfahrzeuges einwirken, nicht zu einer gegenseitigen, reibenden Bewegung der einzelnen Pellets. Zudem verhindert der Preßdruck auf die Katalysatorpelletschüttung 2 jegliches Aufwirbeln einzelner Pellets durch die Gasströmung, die durch den Reaktionsraum 1 hindurchgeleitet wird. Da der Preßdruck auf die Katalysatorpelletschüttung 2 die Katalysatorpellets weitestgehend unbeweglich in ihrer jeweiligen Lage hält und auf diese Weise stärkeren Abrieb der Pellets verhindert, werden Verstopfungen durch feinen Pelletabriebstaub innerhalb der Katalysatorpelletschüttung 2 selbst sowie in nachfolgenden Einheiten, wie z.B. einem nicht gezeigten, nachgeschalteten Filter, vermieden, die ansonsten zu einem erhöhten Druckabfall über den Reformierungsreaktor hinweg führen würden, was wiederum eine Verschlechterung der Reformierungseigenschaften zur Folge hätte.

Es versteht sich, daß der Preßdruck durch geeignete Wahl von Art und Anzahl der Schraubenfedern 7 je nach Anwendungsfall geeignet eingestellt werden kann. Die Schraubenfedern 7 sind vorzugsweise gleichmäßig über die Fläche der beweglichen Blechplatte 4 hinweg verteilt positioniert, um einen gleichmäßen Preßdruck auf die Katalysatorpelletschüttung 2 auszuüben. Da die Federn 7 in dem Gasvorraum 5 angeordnet sind und folglich mit den dortigen, gegebenenfalls reaktiven und/oder heißen Gasen in Kontakt stehen, sind sie vorzugsweise rostfrei und hochtemperaturfest ausgelegt. Selbstverständlich können anstelle der Federn 7 auch andere herkömmliche Mittel zur Erzeugung der erforderlichen Druckkraft auf die bewegliche Blechplatte 4 in Richtung Reaktionsraum 1 verwendet werden.

Der Reformierungsreaktor beinhaltet des weiteren eine Befüllvorrichtung, über die Katalysatorpelletmaterial in den Reaktionsraum 1 eingebracht werden kann, wenn die gesamte Katalysatorpelletschüttung 2 ausgetauscht oder ein betriebsbedingter Schwund an Katalysatormaterial im Reaktionsraum 1 wieder aufgefüllt werden soll. Die Befüllvorrichtung ist so ausgelegt, daß sie ein Einbringen von Katalysatorpelletmaterial in den Reaktionsraum 1 in einfacher Weise auch bei beengten Platzverhältnissen ermöglicht. Insbesondere ist es hierzu nicht notwendig, eine ganze Gehäusewand des Reformierungsreaktor abzunehmen und/oder die Druckplatte 4 aus dem Reaktorgehäuse 8 herauszunehmen. Die Befüllvorrichtung beinhaltet eine in die perforierte Druckplatte 4 eingebrachte Durchtrittsöffnung 4a und ein Befüllrohr 9, das mit einem Ende 9a in die Durchtrittsöffnung 4a mündet und dabei randseitig an der Druckplatte 4 fixiert ist. Das Befüllrohr 9 erstreckt sich von der Druckplatte 4 axial durch den Gaseinlaßraum 5 hindurch in einen Einfüllhals 10 hinein, der mittig an der oberen Reaktorgehäusewandung 8a vorgesehen ist. Der Einfüllhals 10 ist nach außen mit einem aufschraubbaren Verschlußdeckel 11 verschließbar.

In das Innere des Befüllrohres 9 ist im Betrieb des Reaktors ein Verschlußstößel 12 eingeschraubt, der verhindert, daß Katalysatorpellets vom Reaktionsraum 1 in das Befüllrohr 9 gelangen. Der Stößel 12 ist vorzugsweise gasdurchlässig ausgebildet, wozu er eine geeignete perforierte oder poröse Struktur besitzt. Da außerdem der Außendurchmesser des Befüllrohres 9 um ein vorgebbares Maß geringer gewählt ist als der Innendurchmesser des Einfüllhalses 10, kann das über die Einlaßöffnung 6 eintretende, zu reagierende Gasgemisch vom Gaseinlaßraum 5 nicht nur direkt durch die Perforationslöcher der Druckplatte 4, sondern auch durch den zwischen Befüllrohr 9 und Einfüllhals 10 gebildeten Spalt 13 in das Innere des Befüllrohres 9 und von dort über den gasdurchlässigen Stößel 12 in den Reaktionsraum 1 gelangen. Damit wird auch das unmittelbar dem Stößel 12 benachbare Katalysatormaterial im Reaktionsraum 1 von zu reagierendem Gasgemisch angeströmt und kann so aktiv an der Reformierungsreaktion teilnehmen. Alternativ kann vorgesehen sein, auf diese Gaseinströmung über das Innere des Befüllrohres 9 zu verzichten. Der Stößel 12 kann dann gasdicht ausgeführt sein. Ebenso kann in diesem Fall das Befüllrohr 9 abgedichtet im Einfüllhals 10 geführt sein.

Zum Einfüllen von Katalysatorpelletmaterial in den Reaktionsraum 1 wird zunächst der Verschlußdeckel 11 abgeschraubt und anschließend das Befüllrohr 9 samt der Druckplatte 4 entgegen der von den Federn 7 ausgeübten Druckkraft nach oben gezogen und in einer oberen Endstellung mit einer nicht gezeigten Halteklammer fixiert, die zu diesem Zweck auf Höhe des oberen Endes des Einfüllhalses 10 mit einer am Befüllrohr 9 vorgesehenen Kerbe 9a zusammenwirkt. Dann wird der Verschlußstößel 12 ausgeschraubt, wonach das Katalysatorpelletmaterial über das Innere des Befüllrohrs 9 in den Reaktionsraum 1 eingebracht werden kann. Durch das vorherige Hochziehen der Druckplatte 4 steht die Katalysatorpelletschüttung 2 im Reaktionsraum 1 während des Befüllvorgangs nicht unter Preßdruck, so daß das nachzufüllende Katalysatormaterial einfach in den Reaktionsraum 1 eingefüllt werden kann, ohne daß es in diesen hineingedrückt werden muß, was unerwünschte, erhöhte Abrieberscheinungen zur Folge haben könnte. Ist die gewünschte Menge an Katalysatormaterial eingefüllt, wird der Verschlußstößel 12 wieder in das Befüllrohr 9 eingeschraubt, und das Befüllrohr 9 wird unter Lösen der Halteklammer samt der Druckplatte 4 wieder mittels der Druckkräfte der Federn 7 in Richtung Reaktionsraum 1 bewegt, bis die Druckplatte 4 zusammen mit dem Stößel 12 wieder gegen die Katalysatorpelletschüttung 2 anliegt und auf diese den lagefixierenden Preßdruck ausübt. Anschließend wird der Verschlußdeckel 11 wieder auf den Einfüllhals 10 aufgeschraubt.

Die Befüllvorrichtung ermöglicht somit ein vergleichsweise einfaches Nachfüllen von Katalysatorpelletmaterial bei relativ wenig Platzbedarf. Zudem wird ein vollständiges Abnehmen der Druckplatte 4 oder einer anderen Reaktionsraumwandung mit der Folge, daß die Katalysatorpelletschüttung 2 auf einer Seite ganzflächig mit der Außenatmosphäre in Kontakt kommt, z.B. mit Luftsauerstoff, vermieden. Ein solcher Kontakt verursacht häufig unerwünschterweise eine Minderung der katalytischen Aktivität des Katalysatormaterials. Bei der vorliegenden Befüllvorrichtung kommt allenfalls noch der sehr geringe Teil der Katalysatorpelletschüttung 2, welcher an das Befüllrohr 9 angrenzt, mit der Außenatmosphäre in Kontakt. Dieser Kontakt kann zudem auf einen äußerst kurzen Zeitraum beschränkt bleiben, da er spätestens mit dem beginnenden Einfüllen von Katalysatormaterial in das Befüllrohr 9 wieder beendet wird. Durch die bereitgestellte Befüllvorrichtung läßt sich somit eine hohe aktive Lebensdauer der Katalysatorpelletschüttung 2 auch bei häufigeren Nachfüllvorgängen sicherstellen.

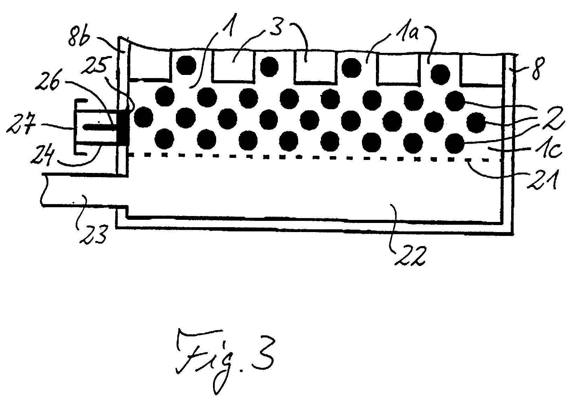

Fig. 2 zeigt in einer entsprechenden Ansicht wie Fig. 1 einen Reformierungsreaktor, der hinsichtlich Aufbau und Funktion mit Ausnahme einer andersartig gestalteten Befüllvorrichtung dem Reaktor von Fig. 1 entspricht, wobei zur Verdeutlichung für funktionell gleiche Elemente dieselben Bezugszeichen verwendet sind und insoweit auf die Bechreibung von Fig. 1 verwiesen werden kann. Die beim Reaktor von Fig. 2 verwendete Befüllvorrichtung ermöglicht ein weitgehend druckloses, seitliches Einbringen von nachzufüllendem Katalysatorpelletmaterial in den Reaktionsraum 1. Die Befüllvorrichtung beinhaltet zu diesem Zweck zum einen ein seitlich angeordnetes Befüllrohr 14, das in eine Durchtrittsöffnung 15 eingesetzt ist, die in die betreffende seitliche Reaktorgehäusewand 8b auf Höhe des oberen Bereichs 1b des Reaktionsraums 1 eingebracht ist. Im normalen Reaktorbetrieb ist das Befüllrohr 14 von einem vorzugsweise gasdichten, eingeschraubten Stößel 16 auf Höhe der Gehäusewand-Durchtrittsöffnung 15 verschlossen. Das außenliegende Ende des Befüllrohrs 14 ist mit einem aufschraubbaren Befüllrohrverschlußdeckel 17 verschließbar. Um die Druckplatte 4 gegen die Wirkung der Schraubenfedern 7 anheben zu können, beinhaltet die Befüllvorrichtung bei diesem Reaktor des weiteren einen Zuganker 18, der mit einem Ende an der Druckplatte 4 fixiert ist und sich von dort durch den Gaseinlaßraum 5 hindurch in einen mittig an der oberen Reaktorgehäusewandung 8a vorgesehenen Gehäusehals 19 hinein erstreckt, der von einem aufschraubbaren Gehäusehals-Verschlußdeckel 20 abgedeckt wird.

Zum Nachfüllen von Katalysatorpelletmaterial wird bei diesem Reaktor zunächst der Gehäusehals-Verschlußdeckel 20 abgeschraubt, um anschließend den Zuganker 18 greifen und samt Druckplatte 4 gegen die Druckkraft der Federn 7 nach oben ziehen zu können. Durch nicht gezeigte Fixiermittel, die mit dem aus dem Reaktorgehäusehals 19 herausragenden Teil des Zugankers 18 zusammenwirken, lassen sich Zuganker 18 und Druckplatte 4 in der angehobenen Endstellung fixieren. Daraufhin wird der Befüllrohr-Verschlußdeckel 17 abgeschraubt, und der Verschlußstößel 16 wird aus dem Befüllrohr 14 herausgeschraubt. Nun kann das nachzufüllende Katalysatorpelletmaterial seitlich über das Befüllrohr 14 eingebracht werden. Dies kann je nach Situation durch entsprechendes Neigen des Reaktorgehäuses 8 und/oder durch Zuhilfenahme des Verschlußstößels 16 als Schieber unterstützt werden. Sobald die gewünschte Menge an Katalysatormaterial nachgefüllt ist, wird der Verschlußstößel 16 wieder in das Befüllrohr 14 eingeschraubt und das Befüllrohr 14 mit dem zugehörigen Verschlußdekkel 17 verschlossen. Dann wird die Zugankerfixierung gelöst, wonach der Zuganker 18 samt Druckplatte 4 durch die Druckkraft der Schraubenfedern 7 nach unten bewegt werden, bis die Druckplatte 4 wieder unter Druck gegen die Katalysatorpelletschüttung 2 im Reaktionsraum 1 zur Anlage kommt und auf diese den gewünschten Preßdruck ausübt.

Ersichtlich ergeben sich auch für die Befüllvorrichtung des Reaktors von Fig. 2 die zu derjenigen des Reaktors von Fig. 1 genannten vorteilhaften Eigenschaften hinsichtlich relativ einfacher Nachfüllbarkeit von Katalysatormaterial selbst bei beengten Platzverhältnissen sowie hinsichtlich höchstens kurzzeitigem und kleinflächigem Inkontakttreten von aktivem Katalysatormaterial im Reaktionsraum 1 mit der Außenumgebung, z.B. Luftsauerstoff, während eines Befüllvorgangs.

Fig. 3 zeigt schematisch den unteren Bereich eines Reformierungsreaktors, der in seinem oberen Bereich einen Aufbau gemäß Fig. 1 oder 2 besitzt, wobei wiederum funktionell gleiche Elemente mit denselben Bezugszeichen versehen sind und insoweit auf die Beschreibung zu den Fig. 1 und 2 verwiesen werden kann.

Bei dem Reaktor von Fig. 3 ist der Reaktionsraum 1 unterseitig von einer perforierten Trägerplatte 21 begrenzt, auf der die Katalysatorpelletschüttung 2 aufsitzt. Die Temperierfluidkanäle 3 und die zwischenliegenden, röhrenförmigen Reaktionsraumkanäle 1a enden unterseitig mit Abstand über der Trägerplatte 21, so daß ein unterer Reaktionsraumbereich 1c gebildet ist, der vollständig mit der Katalysatorpelletschüttung 2 gefüllt ist. Unterhalb der Trägerplatte 21 schließt sich noch innerhalb des Reaktorgehäuses 8 ein vorliegend als Gasauslaßraum fungierender Gasvorraum 22 an, der alternativ auch als Gaseinlaßraum fungieren kann. Im Gasauslaßraum 22 sammelt sich das im Reaktionsraum 1 reagierte und durch die perforierte Trägerplatte 21 hindurchgetretene Reformatgas und kann über eine Auslaßöffnung 23, die alternativ auch als Einlaßöffnung fungieren kann und in eine seitliche Reaktorgehäusewand 8b eingebracht ist, aus dem Reaktorgehäuse 8 herausgeführt werden.

Um bei Bedarf in einfacher Weise Katalysatorpelletmaterial aus dem Reaktionsraum 1 entnehmen zu können, z.B. im Fall eines kompletten Austauschs der Katalysatorpelletschüttung 2, besitzt der Reaktor von Fig. 3 eine Entnahmevorrichtung. Diese beinhaltet ein Auslaßrohr 24, das seitlich in eine Gehäusedurchtrittsöffnung 25 eingesetzt ist, die auf Höhe des unteren Teils des unteren Reaktionsraumbereichs 1c in die Reaktorgehäusewand 8b eingebracht ist, in der sich auch die Auslaßöffnung 23 befindet. Das Auslaßrohr ist von einem einschraubbaren Verschlußstößel 26 auf Höhe der Gehäusedurchtrittsöffnung 25 verschließbar. Außenseitig kann das Auslaßrohr 24 von einem aufschraubbaren Auslaßrohr-Verschlußdeckel 27 abgedeckt werden.

Wenn der Auslaßrohr-Verschlußdeckel 27 abgeschraubt und der Verschlußstößel 26 aus dem Auslaßrohr 24 herausgeschraubt wird, rieselt das Katalysatorpelletmaterial 2 über das Auslaßrohr 24 aus dem Reaktionsraum 1 heraus. Sobald das gesamte oder ein gewünschter Teil des im Reaktionsraum 1 befindlichen Katalysatorpelletmaterials 2 über das Auslaßrohr 24 ausgetreten ist, wird der Verschlußstößel 26 wieder eingeschraubt, wonach der Verschlußdeckel 27 auf das Auslaßrohr 24 aufgeschraubt werden kann.

Das Ausführungsbeispiel von Fig. 3 zeigt, daß sich durch die Erfindung Reformierungsreaktoren, die sich gerade auch für mobile Anwendungen mit begrenztem Bauraum eignen, realisieren lassen, bei denen nicht nur eine lagesichernde Fixierung der Katalysatorpelletschüttung im Reaktionsraum gewährleistet ist und auf relativ einfache und vorteilhafte Weise Katalysatorpelletmaterial in den Reaktionsraum nachgefüllt werden kann, sondern darüber hinaus Katalysatorpelletmaterial bei Bedarf problemlos ohne aufwendige Demontagevorgänge am Reaktorgehäuse aus dem Reaktionsraum abgelassen werden kann.

Es versteht sich, daß erfindungsgemäße Reformierungsreaktoren bei Bedarf mehrere der gezeigten Reaktionsraumanordnungen parallel oder in Reihe geschaltet umfassen können. Dabei lassen sich beispielsweise sowohl Reformierungsreaktoren vom Rohrbündelreaktortyp als auch vom Plattenreaktortyp mit unter Preßdruck stehenden Katalysatorpelletschüttungen in den Reaktionsräumen und mit den erläuterten Befüll- bzw. Entnahmevorrichtungen realisieren.

## Patentansprüche

1. Reformierungsreaktor, insbesondere zur Wasserdampfreformierung von Methanol, mit
- einem mit einer Katalysatorpelletschüttung (2) befüllten Reaktionsraum (1) und
- einer beweglichen Reaktionsraumwandung (4), welche auf die Katalysatorpelletschüttung einen lagefixierenden Preßdruck ausübt,
**gekennzeichnet durch**
- eine Befüllvorrichtung (9 bis 12; 14 bis 17) zum Einfüllen von Katalysatormaterial von außen in den Reaktionsraum (1) durch eine Durchtrittsöffnung (4a; 15), die in eine (4; 8b) der Reaktionsraumwandungen eingebracht ist.

2. Reformierungsreaktor nach Anspruch 1, weiter
**dadurch gekennzeichnet, daß**
die Befüllvorrichtung ein Befüllrohr (9; 14), das mit einem Ende in die Durchtrittsöffnung (4a; 15) mündet und in dessen anderes Ende Katalysatormaterial von außen einfüllbar ist, sowie einen Verschlußstößel (12; 16) beinhaltet, mit dem das Befüllrohr im Bereich der Durchtrittsöffnung gegen Durchtritt von Katalysatormaterial sichernd verschließbar ist.

3. Reformierungsreaktor nach Anspruch 1 oder 2, weiter
**dadurch gekennzeichnet, daß**
die Befüllvorrichtung Mittel (9; 18) zum Zurückbewegen der beweglichen Reaktionsraumwandung (4) entgegen der Wirkungsrichtung des lagefixierenden Preßdrucks auf die Katalysatorpelletschüttung (2) beinhaltet.

4. Reformierungsreaktor nach Anspruch 2 oder 3, weiter
**dadurch gekennzeichnet, daß**
- die Durchtrittöffnung (4a) in die bewegliche, gasdurchlässig gestaltete Reaktionsraumwandung (4) eingebracht ist und
- das Befüllrohr (9) mit einem Ende an der beweglichen Reaktionsraumwandung (4) festgelegt ist und sich durch einen Gasvorraum (5) hindurch in einen Einfüllhals (10) hinein erstreckt, der nach außen von einem lösbaren Verschlußdeckel (11) abdeckbar ist.

5. Reformierungsreaktor nach einem der Ansprüche 1 bis 4, weiter
**gekennzeichnet durch**
eine im unteren Bereich (1c) des Reaktionsraums 1 angeordnete Auslaßvorrichtung (24 bis 27) zum Entnehmen von Katalysatormaterial aus dem Reaktionsraum.

## Claims

1. Reformation reactor, in particular for the reformation of steam by methanol, comprising
- a reaction chamber (1) filled with a packing of catalyst pellets (2), and
- a movable reaction chamber wall (4) which exerts a position-retaining pressure on the catalyst pellet filling,
**characterized in that**
it also comprises a filling device (9 to 12; 14 to 17) for the charging of catalyst material into the reaction chamber (1) from outside through an inlet opening (4a; 15) formed in one of the reaction chamber's walls (4, 8b).

2. Reformation reactor according to Claim 1, further
**characterized in that**
the filling device comprises a filling tube (9; 14) opening at one end into the inlet opening (4a; 15), into the other end of which catalyst material can be introduced from outside, and a closure tappet (12; 16) by means of which the filling tube can be closed off securely in the area of the inlet opening to prevent the passage of catalyst material.

3. Reformation reactor according to Claims 1 or 2, further
**characterized in that**
the filling device comprises means (9; 18) for the retraction of the movable reaction chamber wall (4) against the direction in which the position-retaining pressure on the catalyst pellet packing (2) acts.

4. Reformation reactor according to Claims 2 or 3, further
**characterized in that**
- the inlet opening is formed in the movable reaction chamber wall (4) designed to be permeable to gas, and
- the filling tube (9) is attached at one end to the movable reaction chamber wall (4) and extends through a gas antechamber (5) into a filling neck (10), which can be covered on the outside by a removable cover (11).

5. Reformation reactor according to any of Claims 1 to 4, further
**characterized in that**
in the lower part (1c) of the reaction chamber (1) it comprises an outlet device (24 to 27) for the removal of catalyst material from the reaction chamber.

## Revendications

1. Réacteur de reformage, en particulier pour le reformage à la vapeur d'eau de méthanol, comprenant
◆ une enceinte de réaction (1) remplie d'une masse en vrac (2) constituée de boulettes de catalyseur (1), et
◆ une paroi d'enceinte de réaction (4) mobile, exerçant une pression de pressage, fixant une position, sur la masse en vrac de boulettes de catalyseur,
caractérisé par
◆ un dispositif de remplissage (9 à 12; 14 à 17) destiné à introduire du matériau catalyseur depuis l'extérieur dans l'enceinte de réaction (1) à travers une ouverture de passage (4a ; 15) ménagée dans l'une (4 ; 8b) des parois de l'enceinte de réaction.

2. Réacteur de reformage selon la revendication 1, en outre caractérisé en ce que le dispositif de remplissage comprend un tube de remplissage (9 ; 14), débouchant par une extrémité dans l'ouverture de passage (4a ; 15) et dans l'autre extrémité duquel du matériau de catalyseur peut être introduit depuis l'extérieur, ainsi qu'un poussoir de fermeture (12 ; 16) à l'aide duquel le tube de remplissage peut être obturé dans la zone de l'ouverture de passage pour empêcher de façon sûre tout passage de matériau catalyseur.

3. Réacteur de reformage selon la revendication 1 ou 2, en outre caractérisé en ce que le dispositif de remplissage contient des moyens (9 ; 18) destinés à ramener la paroi (4) de l'enceinte de réaction mobile, à l'encontre de la direction d'action de la pression de pressage fixant la position, sur la masse en vrac (2) des boulettes de catalyseur.

4. Réacteur de reformage selon la revendication 2 ou 3, en outre caractérisé en ce que
◆ l'ouverture du passage (4a) est ménagée dans la paroi (4) mobile de l'enceinte de réaction, configurée de façon à être perméable aux gaz, et
◆ le tube de remplissage (9) est fixé par une extrémité sur la paroi (4) mobile de l'enceinte de réaction et s'étend en passant à travers une enceinte formant réserve à gaz (5), en pénétrant dans un goulot de remplissage (10) qui peut être recouvert vers l'extérieur par un couvercle de fermeture (11) désolidarisable.

5. Réacteur de reformage selon la revendication 1 à 4, en outre caractérisé par un dispositif d'échappement (24 à 27) disposé dans la zone inférieure (1c) de l'enceinte de réaction, pour assurer le prélèvement du matériau de catalyseur à partir de l'enceinte de réaction.
